# EUROPEAN PATENT SPECIFICATION

(11) **EP 2 325 690 B1**
(45) Date of publication and mention of the grant of the patent: **20.07.2016**
(21) Application number: 10165404.4
(22) Date of filing: 09.06.2010
(51) Int. Cl.: G02F 1/1333, G02F 1/1343, G06F 3/041

(54) **Liquid crystal display device**
Flüssigkristallanzeigevorrichtung
Dispositif d'affichage à cristaux liquides

(30) Priority: 18.11.2009 KR 20090111480
(43) Date of publication of application: 25.05.2011
(73) Proprietor: LG Display Co., Ltd., Seoul 150-721 (KR)
(72) Inventor: Song, In Hyuk, 411-781, Gyeonggi-do (KR)
(74) Representative: Ter Meer Steinmeister & Partner

(56) References cited:
- EP-A2- 0 917 174
- WO-A2-2007/146785
- JP-A- 9 105 918
- US-A1- 2008 151 167
- US-B1- 6 597 414

## Description

### CROSS REFERENCE TO RELATED APPLICATIONS

This application claims the benefit of the Korean Patent Application No. 10-2009-0111480 filed on November 18, 2009, which is hereby incorporated by reference as if fully set forth herein.

### BACKGROUND OF THE INVENTION

### Field of the Invention

The present invention relates to a liquid crystal display (LCD) device, and more particularly, to an LCD device capable of sensing a user's touch signal.

### Discussion of the Related Art

An LCD device can realize low power consumption owing to a low driving voltage, and also the LCD device is suitable for a portable. In this respect, the LCD device is widely used in various fields of notebook computer, monitor, spacecraft, aircraft, and etc.

The LCD device includes a lower substrate, an upper substrate, and a liquid crystal layer between the lower and upper substrates. In case of the LCD device, an alignment state of liquid crystal molecules in the liquid crystal layer is controlled based on whether or not an electric field is applied thereto, and light transmittance is controlled according to the alignment state of liquid crystal molecules, whereby images are displayed thereon.

Furthermore, the LCD device capable of sensing a user's touch signal has been developed for the notebook computer, in which a position-sensing device having a sensing electrode is provided to sense the user's touch signal.

The LCD device with the position-sensing device may be largely classified into a resistive type, a capacitive type, and an electro-magnetic type according to a position-sensing method. The resistive type LCD device senses a change of current which occurs due to a pressure based on a user's touch; the capacitive type LCD device senses a change of capacitance which occurs by a user's touch; and the electro-magnetic type LCD device senses a portion selected by a user through a change of voltage under the circumstance an electric field is applied thereto.

Hereinafter, a related art LCD device will be described with reference to the accompanying drawings.

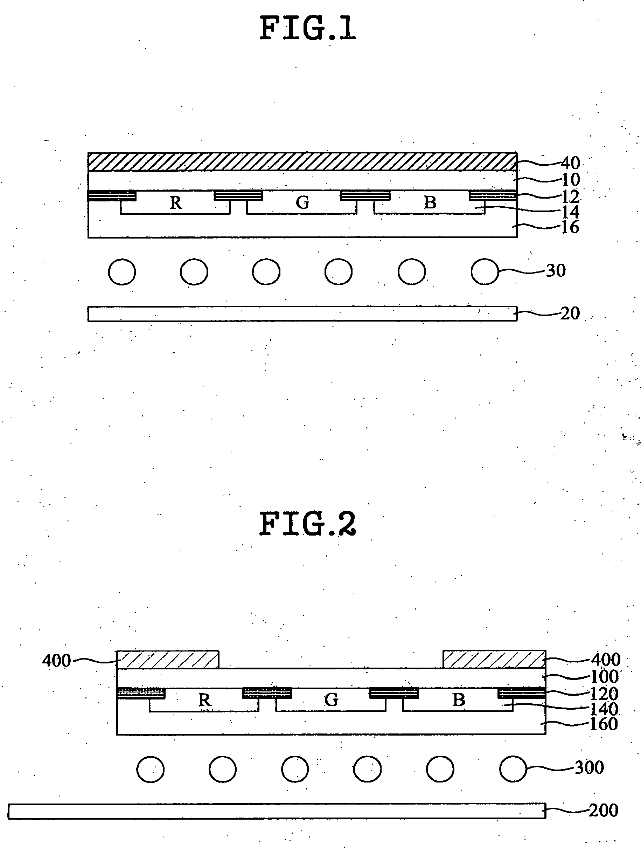

FIG. 1 is a cross section view illustrating the related art LCD device.

As shown in FIG. 1, the related art LCD device includes an upper substrate 10, a lower substrate 20, and a liquid crystal layer 30 between the upper and lower substrates 10 and 20.

On one surface of the upper substrate 10, and more particularly, one surface of the upper substrate 10 confronting the lower substrate 20, there is a light-shielding layer 12 to prevent light leakage. Also, red (R), green (G), and blue (B) color filter layers 14 are respectively formed between each light-shielding layer 12, to thereby display red (R), green (G), and blue (B) colors. For planarization of the upper substrate 10, an overcoat layer 16 is formed on the color filter layers 14.

On one surface of the lower substrate 20, and more particularly, one surface of the lower substrate 20 confronting the upper substrate 10, there are a thin film transistor, a pixel electrode, and a common electrode, although not shown. The thin film transistor functions as a switching element, and the pixel electrode is electrically connected to the thin film transistor. The common electrode is provided in parallel to the pixel electrode, whereby the common electrode, together with the pixel electrode, forms a parallel electric field.

EP 10165404.4 [0010] On the other surface of the upper substrate 10, and more particularly, the other surface of the upper substrate 10, which is not confronting the lower substrate 20, there is an ITO (Indium-Tin-Oxide) layer 40.

The ITO layer 40 is provided to prevent a static electricity from occurring during a manufacturing process of the LCD device. That is, when the substrate is brought into contact with plural manufacturing and transferring apparatuses during the manufacturing process of the LCD device, the static electricity may occur. In order to prevent the static electricity from occurring during the manufacturing process of the LCD device, the ITO layer 40 as a conductive material layer is formed on the other surface of the upper substrate 10.

The ITO layer 40 included in the related art LCD device can prevent the static electricity during the manufacturing process. However, in case of the LCD device with the position-sensing device, user's touch sensitivity might be lowered due to the ITO layer 40. That is, when a user touches a predetermined portion of the LCD device, the ITO layer 40 positioned on the upper side of the LCD device hinders the user's touch sensitivity, whereby it is difficult to exactly sense the touched portion. Especially, in case of the capacitive type LCD device sensing the user's touch through the change of capacitance, the problem related with the deterioration of touch sensitivity get worse.

US 2008/0151167 A1 describes a liquid crystal display device including a first substrate and a second substrate. The second substrate is opposed to the first substrate and includes a translucent conductive film. The translucent conductive film includes a body portion and a pull-out portion. The body portion is opposed to a common electrode and pixel electrodes and may be provided without patterning (without any gaps), or, as long as it achieves a shielding effect against static electricity, it may be patterned to form a mesh.

JP 9105918A describes a liquid crystal display device including two transparent substrates arranged to face each other, wherein a liquid crystal layer LC is interposed there between. On a surface of one transparent substrate a conductive layer having translucency is formed.

US 6,597,414 B1 describes a horizontal electric-field type LCD device. The device includes a first substrate and a second substrate with liquid crystal confined in a space defined between the first and second substrates. On an outer surface of the first substrate a transparent conductive layer is formed, which is used for protecting the LCD device from an unwanted electric field.

WO 2007/146785 A2 describes liquid-crystal display (LCD) touch screens: A conductive black matrix layer provided below a top glass of the device may be used as a touch sense layer.

EP 0 917 174 A2 describes an electromagnetic shielding bonding film carrying geometrically patterned electroconductive material. A line width of the geometric pattern and a line spacing is selected such that an aperture ratio is 50% or more.

### SUMMARY OF THE INVENTION

Accordingly, the present invention is directed to an LCD device that substantially obviates one or more problems due to limitations and disadvantages of the related art.

An advantage of the present invention is to provide an LCD device which facilitates to prevent a static electricity during a manufacturing process, and to present deterioration in user's touch sensitivity.

Additional advantages and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

The object is solved by the features of the independent claim.

To achieve these and other advantages and in accordance with the purpose of the invention, as embodied and broadly described herein, there is provided an LCD device preferably comprising: first and second substrate confronting each other; a liquid crystal layer between the first and second substrates; and a transparent electrode pattern layer in a predetermined pattern on one surface of the first substrate, which is not confronting the second substrate, for prevention of static electricity and improvement of touch sensitivity.

At this time, the transparent electrode pattern layer includes plural first patterns arranged at fixed intervals in a first direction. In this case, the first patterns are respectively connected to second patterns arranged in a second direction being different from the first direction. Also, the first patterns include a region with a first width, and another region with a second width, wherein the first width is different from the second width.

At this time, a pattern width of the transparent electrode pattern layer is 5 ∼ 100*µ*m.

The transparent electrode pattern layer is grounded while being connected to a ground pad on the second substrate. In this case, the transparent electrode pattern layer is connected to the ground pad through a conductive tape.

In addition, the LCD device further comprises a sensing electrode for sensing a user's touch on any one of the first and second substrates. In this case, the sensing electrode may be formed of a common electrode on the second substrate, or a light-shielding layer on the first substrate.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a cross section view illustrating an LCD device according to the related art;
FIG. 2 is a cross section view illustrating an LCD device according to one embodiment of the present invention;
FIGs. 3A and 3B are plan views illustrating transparent electrode pattern layers according to various embodiments of the present invention;
FIG. 4A is a plan view illustrating that a transparent electrode pattern layer is grounded through a second substrate in the LCD device according to the present invention, and FIG. 4B is a cross section view illustrating that a transparent electrode pattern layer is grounded through a second substrate in the LCD device according to the present invention;
FIG. 5A is a plan view illustrating a second substrate according to one embodiment of the present invention, and FIG. 5B is a cross section view along I-I of FIG. 5A; and
FIG. 6A is a plan view illustrating a second substrate according to another embodiment of the present invention, and FIG. 6B is a cross section view along I-I of FIG. 6A.

### DETAILED DESCRIPTION OF THE INVENTION

Reference will now be made in detail to the exemplary embodiments of the present invention, examples of which are illustrated in the accompanying drawings. Wherever possible, the same reference numbers will be used throughout the drawings to refer to the same or like parts.

Hereinafter, an LCD device according to the present invention will be described with reference to the accompanying drawings.

FIG. 2 is a cross section view illustrating an LCD device according to one embodiment of the present invention.

As shown in FIG. 2, the LCD device according to one embodiment of the present invention includes first and second substrates 100 and 200 confronting each other, and a liquid crystal layer 300 between the first and second substrates 100 and 200.

On one surface of the first substrate 100, and more particularly, one surface of the first substrate 100 which is not confronting the second substrate 200, there is a transparent electrode pattern layer 400.

A purpose of the transparent electrode pattern layer 400 is to prevent a static electricity which occurs during a manufacturing process. Also, since the transparent electrode pattern layer 400 is formed in a predetermined pattern, instead of being formed on an entire area of one surface of the first substrate 100, it results in improvement in user's touch sensitivity. That is, as shown in the drawings, when the transparent electrode pattern layer 400 is formed in the predetermined pattern on one surface of the first substrate 100, a resistance of electrode is increased as compared to a related art LCD device with an ITO layer on an entire surface of the first substrate 100, to thereby result in improved touch sensitivity of sensing electrode. Especially, if a capacitive type LCD device senses a user's touch through a change of capacitance, the increased resistance of electrode enables the remarkably-improved touch sensitivity of sensing electrode.

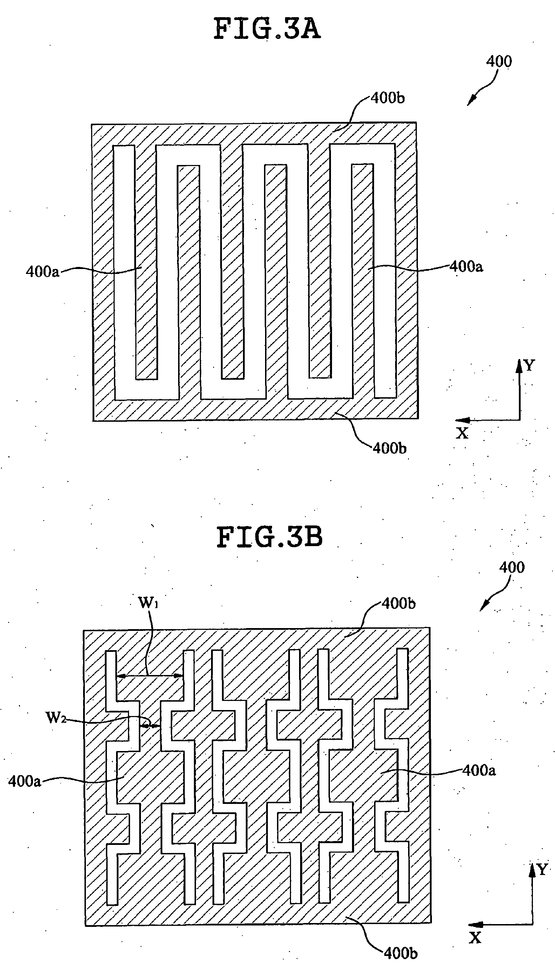

A shape of the transparent electrode pattern layer 400 may vary as shown in FIGs. 3A and 3B, but it is not limited to these shapes.

As shown in FIGs. 3A and 3B, the transparent electrode pattern layer 400 may comprise plural first patterns 400a arranged in a first direction (y-direcfion), and plural second patterns 400b arranged in a second direction (x-direction) which is different from the first direction.

The first patterns 400a are arranged at fixed intervals, and are respectively connected to the second patterns 400b. That is, the first patterns 400a are connected to the second patterns 400b, as a whole.

As shown in FIG. 3B, the first patterns 400a are provided with a region with a first width (W1), and a region with a second width (W2), wherein the first width (W1) is different from the second width (W2).

The first patterns 400a and second patterns 400b included in the transparent electrode pattern layer 400 are properly adjusted in width so as to prevent static electricity during the manufacturing process, and to improve touch sensitivity.

In more detail, a low resistance of electrode is profitable to prevent the static electricity occurring during the manufacturing process, and a high resistance of electrode is profitable to improve the touch sensitivity. Thus, the resistance of electrode is adjusted in consideration for both static electricity and touch sensitivity, preferably. The resistance of electrode is in inverse proportion to a width of electrode. In this respect, the width of electrode has to be properly adjusted based on the desirable resistance of electrode.

In consideration for both static electricity and touch sensitivity, it is preferable that a pattern width of the transparent electrode pattern layer 400, and more particularly, a pattern width in each of the first patterns 400a and second patterns 400b have 5 ∼ 100*µ*m. If the pattern width of the transparent electrode pattern layer 400 is less than 5*µ*m, the large resistance of electrode is such as to reduce the efficiency of preventing the static electricity. If the pattern width of the transparent electrode pattern layer 400 is more than 100*µ*m, the small resistance of electrode is such as to deteriorate the touch sensitivity.

An interval between the patterns included in the transparent electrode pattern layer 400, for example, an interval between the first patterns 400a, can be adjusted properly. In consideration for visibility, it is not preferable to provide the excessively large interval between the patterns. In detail, light transmitting through an area corresponding to the patterns included in the transparent electrode pattern layer 400 is different in transmittance from light transmitting through an area between the patterns included in the transparent electrode pattern layer 400. Thus, if the interval between the patterns included in the transparent electrode pattern layer 400 is too large, a difference of transmittance is too large to enhance the visibility. In this respect, it is preferable to provide the interval at a predetermined range allowing a user's unawareness.

The transparent electrode pattern layer 400 may be patterned by depositing a transparent conductive material such as ITO through the use of shadow mask.

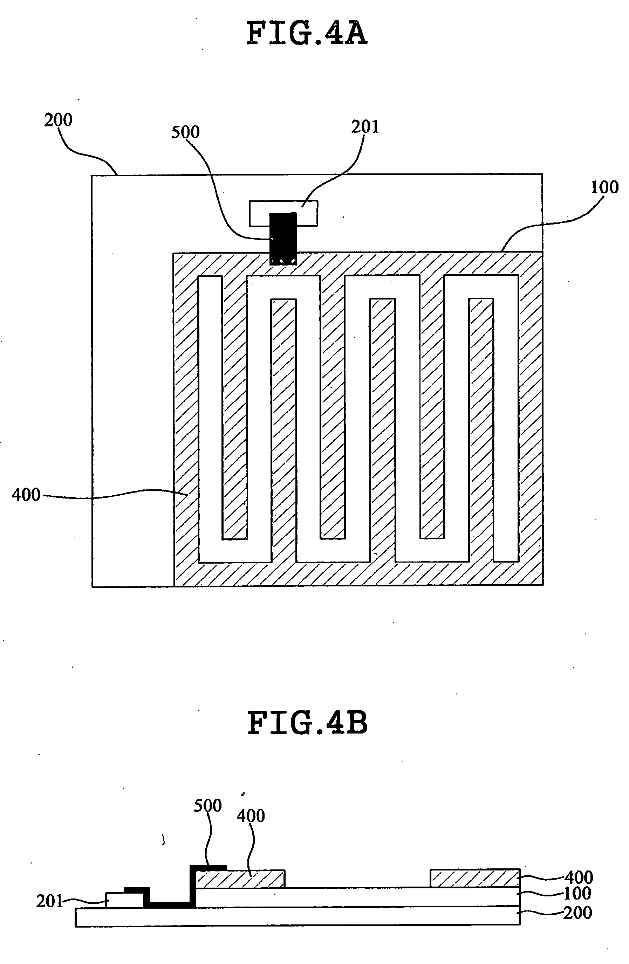

The transparent electrode pattern layer 400 on one surface of the first substrate 100 may be grounded through the second substrate 200, which will be explained with reference to FIGs. 4A and 4B.

FIG. 4A is a plan view illustrating that the transparent electrode pattern layer 400 of the present invention is grounded through the second substrate 200; and FIG. 4B is a cross section view illustrating that the transparent electrode pattern layer 400 of the present invention is grounded through the second substrate 200.

As shown in FIGs. 4A and 4B, the transparent electrode pattern layer 400 is formed on one surface of the first substrate 100, and a ground pad 201 is formed on one surface of the second substrate 200.

Also, the transparent electrode pattern layer 400 is connected to the ground pad 201 through a conductor 500 such as a conductive tape. Since the transparent electrode pattern layer 400 is grounded through the second substrate 200, it is possible to prevent the static electricity from occurring during the manufacturing process.

Referring once again to FIG. 2, a light-shielding layer 120 is formed on the other surface of the first substrate 100, wherein the other surface of the first substrate 100 indicates a surface which is confronting the second substrate 200.

The light-shielding layer 120 prevents the light from leaking in other regions except pixel regions, wherein the light-shielding layer 120 is patterned in a matrix configuration. Also, the light-shielding layer 120 may function as the sensing electrode. In this case, the light-shielding layer 120 includes a conductive material, and a signal-applying unit for applying a touch signal is connected to the light-shielding layer 120.

Between each light-shielding layer 120, there are red (R), green (G), and blue (B) color filter layers 140, respectively. As shown in the drawings, the color filter layers 140 may include additional yellow (Y), white (W), or cyan (CYAN) color filter layers as well as the red (R), green (G), and blue (B) color filter layers.

For planarization of the substrate, an overcoat layer 160 is formed on the color filter layers 140.

On the second substrate 200, there are gate and data lines, a thin film transistor, and a common electrode. The gate and data lines cross each other at a right angle, to thereby the pixel region on the second substrate 200. The thin film transistor, which functions as a switching element, is formed at a crossing portion of the gate and data lines. In the pixel region, the common electrode is provided in parallel to a pixel electrode.

A structure of the second substrate 200 will be explained as follows. The following structure of the second substrate 200 is only one example, that is, it is not limited to this structure.

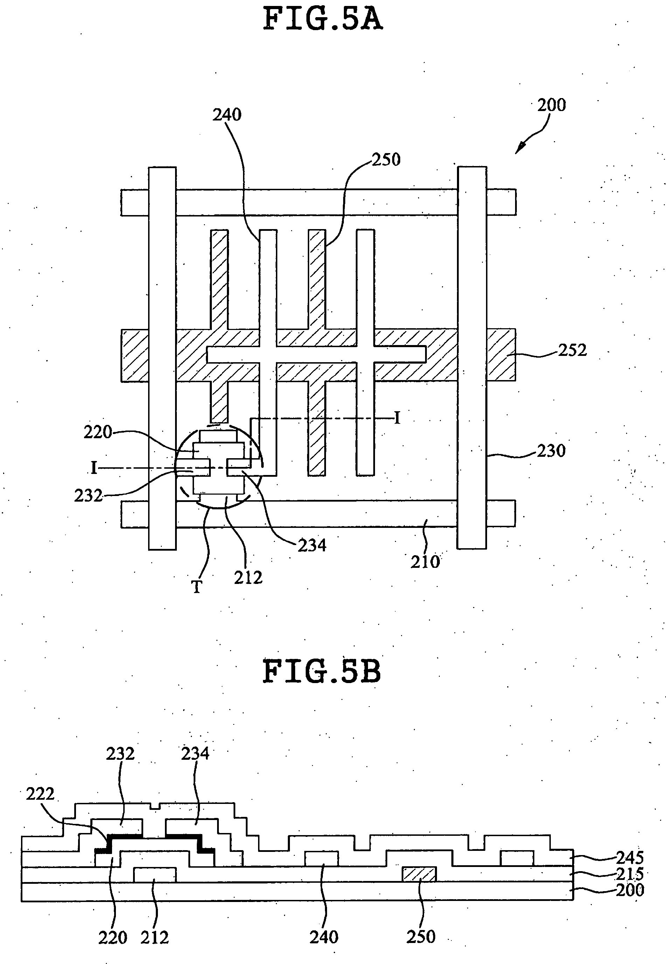

FIG. 5A is a plan view illustrating the second substrate according to one embodiment of the present invention; and FIG. 5B is a cross section view along I-I of FIG. 5A. FIGs. 5A and 5B illustrate only one pixel of the LCD device.

As shown in FIG. 5A, the gate and data lines 210 and 230 crossing each other at a right angle are formed on the second substrate 200. At the crossing portion of the gate and data lines 210 and 230, there is the thin film transistor (T).

The thin film transistor (T) includes a gate electrode 212, a semiconductor layer 220, a source electrode 232, and a drain electrode 234.

The gate electrode 212 is prominently diverged from the gate line 210; the source electrode 232 is prominently diverged from the data line 230; and the drain electrode 234 is provided at a predetermined interval from the source electrode 232.

The pixel electrode 240 is connected to the thin film transistor (T). In detail, the pixel electrode 240 is connected to the drain electrode 234 of the thin film transistor (T).

The common electrode 250 is provided in parallel to the pixel electrode 240, whereby the common electrode 250 together with the pixel electrode 240 forms a parallel electric field. The common electrode 250 is diverged from a common line 252, wherein the common electrode 250 functions as the sensing electrode. In this case, the signal-applying. unit for applying the touch signal is connected to the common electrode 250.

As shown in FIG. 5B, the gate electrode 212 is formed on the second substrate 200; and a gate insulation film 215 is formed on the second substrate 200 including the gate electrode 212. On the gate insulation film 215, there is the semiconductor layer 220. Then, source and drain electrodes 232 and 234 are formed on the semiconductor layer 220, wherein the source and drain electrodes 232 and 234 are provided at a predetermined interval therebetween. Also, the semiconductor layer 220 comprises an ohmic contact layer 222 doped with impurities, which is in contact with the source electrode 232 and the drain electrode 234. Then, a passivation film 245 is formed on the source and drain electrodes 232 and 234.

In the meantime, the pixel electrode 240 and the common electrode 250 are formed in the pixel region.

The pixel electrode 240 is formed on the gate insulation film 215. That is, the pixel electrode 240 is formed at the same layer as the source and drain electrodes 232 and 234. Especially, the pixel electrode 240 extends from the drain electrode 234.

The common electrode 250 is formed on the second substrate 200, and is positioned under the gate insulation film 215. That is, the common electrode 250 is formed at the same layer as the gate electrode 212.

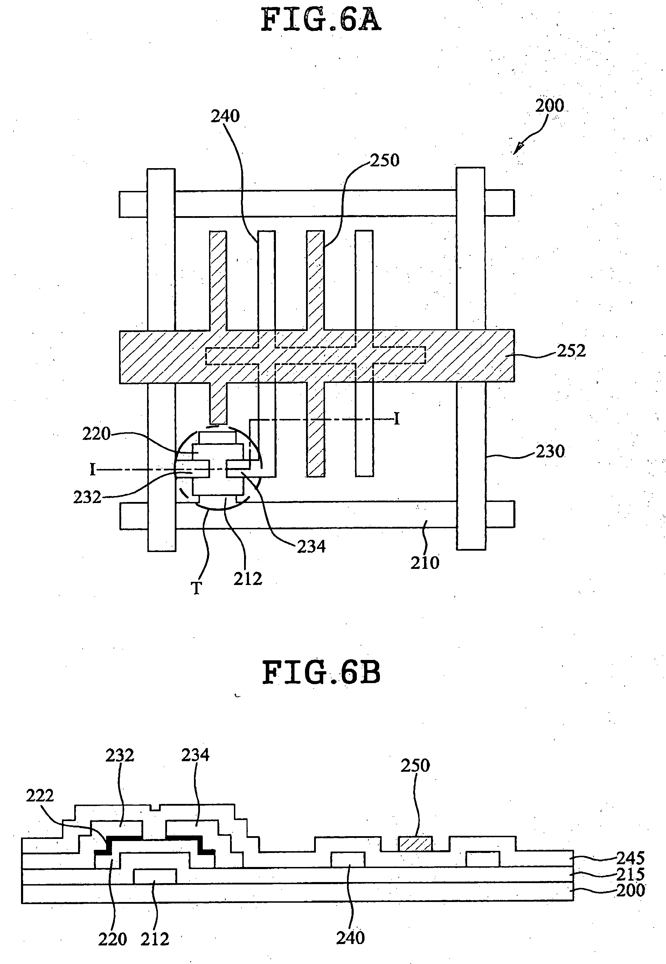

FIG. 6A is a plan view illustrating the second substrate according to another embodiment of the present invention; and FIG. 6B is a cross section view along I-I of FIG. 6A. Except positions of the common electrode 250 and the common line 252, the second substrate shown in FIGs. 6A and 6B is identical in structure to the second substrate shown in FIGs. 5A and 5B, whereby the same reference numbers will be used throughout the drawings to refer to the same or like parts, and a detailed explanation for the same parts will be omitted.

Referring to FIGs. 6A and 6B, the common electrode 250 and the common line 252 are formed on the passivation film 245.

In the second substrate 200 according to the embodiments of the present invention, the parallel electric field is applied through the pixel electrode 240 and common electrode 250 formed at the different layers, but it is not limited to this structure. For example, the parallel electric field may be applied through the pixel electrode 240 and common electrode 250 formed at the same layer. That is, both the pixel electrode 240 and common electrode 250 may be formed on the passivation film 245, or may be formed on the gate insulation film 215.

Although not shown, alignment layers are respectively formed on the first and second substrates 100 and 200. The alignment layers are provided to an initial alignment of liquid crystal molecules in the liquid crystal layer 300. The alignment layers correspond to the uppermost layers of the respective first and second substrates 100 and 200.

Also, the first and second substrates 100 and 200 are bonded to each other by a sealant provided in the circumference of the substrates, and spacers for maintenance of a cell gap are additionally provided between the first and second substrates 100 and 200.

As mentioned above, the transparent electrode pattern layer 400 is formed in the predetermined pattern on one surface of the first substrate 100, which enables to prevent the static electricity during the manufacturing process, and to improve the user's touch sensitivity through the increased resistance of electrode.

Especially, in case of the capacitive type LCD device which senses the user's touch signal through the change of capacitance, the touch sensitivity of sensing electrode can be highly improved.

It will be apparent to those skilled in the art that various modifications and variations can be made in the present invention. Thus, it is intended that the present invention covers the modifications and variations of this invention provided they come within the scope of the appended claims and their equivalents.

## Claims

1. An LCD device comprising:
first and second substrate (100, 200) confronting each other;
a liquid crystal layer (300) between the first and second substrates (100, 200); and
a transparent electrode pattern layer (400) in a predetermined pattern on one surface of the first substrate (100, 200), which is not confronting the second substrate (200), for prevention of static electricity and improvement of touch sensitivity,
whereas transparent electrode pattern layer (400) includes plural first patterns (400a) arranged at fixed intervals in a first direction, **characterized in that** the first patterns (400a) include a region with a first width (W1) in the first direction and another region with a second width (W2) in the first direction, wherein the first width (W1) is different from the second width (W2).

2. The LCD device according to claim 1, wherein the first patterns (400a) are respectively connected to second patterns (400b) arranged in a second direction being different from the first direction.

3. The LCD device according to claim 1, wherein a pattern width of the first patterns (400a) in the first direction a pattern width of the second patterns (400b) in the second direction is 5 ∼ 100*µ*m, respectively

4. The LCD device according to claim 1, wherein the transparent electrode pattern layer (400) is grounded while being connected to a ground pad (201) on the second substrate (200).

5. The LCD device according to claim 4, wherein the transparent electrode pattern layer (400) is connected to the ground pad (201) through a conductive tape (500).

6. The LCD device according to claim 1, further comprising a sensing electrode (250) for sensing a user's touch on any one of the first and second substrates (100, 200).

7. The LCD device according to claim 6, wherein pixel and common electrodes (240, 250) are formed in parallel on the second substrate (200), and the sensing electrode (250) is formed of the common electrode on the second substrate (200).

8. The LCD device according to claim 6, wherein a light-shielding layer (120) and color filter layers (140) are formed on the first substrate (100), and the sensing electrode (250) is formed of the light-shielding layer (120) on the first substrate (100).

## Patentansprüche

1. LCD-Vorrichtung, die umfasst:
ein erstes Substrat und ein zweites Substrat (100, 200), die einander zugewandt sind;
eine Flüssigkristallschicht (300) zwischen dem ersten und dem zweiten Substrat (100, 200); und
eine lichtdurchlässige Elektrodenmusterschicht (400) in einem vorgegebenen Muster auf einer Oberfläche des ersten Substrats (100, 200), die nicht dem zweiten Substrat (200) zugewandt ist, um statische Elektrizität zu verhindern und die Berührungsempfindlichkeit zu verbessern,
wobei die lichtdurchlässige Elektrodenmusterschicht (400) mehrere erste Muster (400a) aufweist, die in festen Intervallen in einer ersten Richtung angeordnet sind, **dadurch gekennzeichnet, dass** die ersten Muster (400a) einen Bereich mit einer ersten Breite (W1) in der ersten Richtung und einen weiteren Bereich mit einer zweiten Breite (W2) in der ersten Richtung besitzen, wobei die erste Breite (W1) von der zweiten Breite (W2) verschieden ist.

2. LCD-Vorrichtung nach Anspruch 1, wobei die ersten Muster (400a) jeweils mit zweiten Mustern (400b) verbunden sind, die in einer von der ersten Richtung verschiedenen zweiten Richtung angeordnet sind.

3. LCD-Vorrichtung nach Anspruch 1, wobei eine Musterbreite der ersten Muster (400a) in der ersten Richtung und eine Musterbreite der zweiten Muster (400b) in der zweiten Richtung jeweils 5 bis 100 mm betragen.

4. LCD-Vorrichtung nach Anspruch 1, wobei die lichtdurchlässige Elektrodenmusterschicht (400) geerdet ist, wobei sie mit einem Masseanschlussfleck (201) auf dem zweiten Substrat (200) verbunden ist.

5. LCD-Vorrichtung nach Anspruch 4, wobei die lichtdurchlässige Elektrodenmusterschicht (400) mit dem Masseanschlussfleck (201) über ein leitendes Band (500) verbunden ist.

6. LCD-Vorrichtung nach Anspruch 1, die ferner eine Erfassungselektrode (250) umfasst, um die Berührung eines Anwenders auf dem ersten oder dem zweiten Substrat (100, 200) zu erfassen.

7. LCD-Vorrichtung nach Anspruch 6, wobei auf dem zweiten Substrat (200) Pixel und gemeinsame Elektroden (240, 250) parallel ausgebildet sind und die Erfassungselektrode (250) aus der gemeinsamen Elektrode auf dem zweiten Substrat (200) gebildet ist.

8. LCD-Vorrichtung nach Anspruch 6, wobei auf dem ersten Substrat (100) eine Lichtabschirmungsschicht (120) und Farbfilterschichten (140) gebildet sind und die Erfassungselektrode (250) auf dem ersten Substrat (100) aus der Lichtabschirmungsschicht (120) gebildet ist.

## Revendications

1. Dispositif d'affichage à cristaux liquides comprenant :
des premier et deuxième substrats (100, 200) qui se trouvent face à face ;
une couche de cristaux liquides (300) entre les premier et deuxième substrats (100, 200) ; et
une couche transparente de motif d'électrode (400) dans un motif prédéterminé sur une surface du premier substrat (100, 200), qui ne se trouve pas face au deuxième substrat (200), pour la prévention de l'électricité statique et l'amélioration de la sensibilité tactile,
dans lequel la couche transparente de motif d'électrode (400) comprend plusieurs premiers motifs (400a) agencés à des intervalles fixes dans un premier sens, **caractérisé en ce que** les premiers motifs (400a) comprennent une région avec une première largeur (W1) dans le premier sens et une autre région avec une deuxième largeur (W2) dans le premier sens, dans lequel la première largeur (W1) est différente de la deuxième largeur (W2).

2. Dispositif d'affichage à cristaux liquides selon la revendication 1, dans lequel les premiers motifs (400a) sont respectivement reliés à des deuxièmes motifs (400b) agencés dans un deuxième sens différent du premier sens.

3. Dispositif d'affichage à cristaux liquides selon la revendication 1, dans lequel une largeur de motif des premiers motifs (400a) dans le premier sens et une largeur de motif des deuxièmes motifs (400b) dans le deuxième sens sont respectivement de 5 à 100 µm.

4. Dispositif d'affichage à cristaux liquides selon la revendication 1, dans lequel la couche transparente de motif d'électrode (400) est mise à la masse en étant reliée à un plot de masse (201) sur le deuxième substrat (200).

5. Dispositif d'affichage à cristaux liquides selon la revendication 4, dans lequel la couche transparente de motif d'électrode (400) est reliée au plot de masse (201) par l'intermédiaire d'un ruban adhésif conducteur (500).

6. Dispositif d'affichage à cristaux liquides selon la revendication 1, comprenant en outre une électrode de détection (250) pour détecter un toucher d'un utilisateur sur l'un quelconque des premier et deuxième substrats (100, 200).

7. Dispositif d'affichage à cristaux liquides selon la revendication 6, dans lequel une électrode de pixel et une électrode commune (240, 250) sont formées en parallèle sur le deuxième substrat (200), et l'électrode de détection (250) est constituée de l'électrode commune sur le deuxième substrat (200).

8. Dispositif d'affichage à cristaux liquides selon la revendication 6, dans lequel une couche faisant écran à la lumière (120) et des couches de filtre de couleur (140) sont formées sur le premier substrat (100), et l'électrode de détection (250) est constituée de la couche faisant écran à la lumière (120) sur le premier substrat (100).
